# EUROPEAN PATENT APPLICATION

(11) **EP 4 507 209 A1**
(43) Date of publication of application: **12.02.2025**
(21) Application number: 23190802.1
(22) Date of filing: 10.08.2023
(51) Int. Cl.: H04B 7/0426, H04B 7/06

(54) **A METHOD FOR DETERMINING A PREDICTION OF A BEAM DETACHMENT**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

The invention relates to a method (100) for determining a prediction of a beam detachment, wherein a first vehicle (10) comprises an antenna system (11) for using at least one beam, wherein the antenna system (11) of the first vehicle (10) is connected with a further antenna system (21) of a second vehicle (20) via an established beam pair A,B, wherein the method (100) comprises the following steps performed at the first vehicle (10):
- Determining (101) a prediction of a trajectory (1) of the first vehicle (10) for a given time period, wherein the trajectory (1) is defined as the vehicle's path based on space and time, in particular based on coordinates and on time points,
- Receiving (102) a signalling comprising a mobility awareness information of the second vehicle (20), wherein the mobility awareness information comprises a further prediction of a trajectory (2) of the second vehicle (20) for the given time period and a spatial information of the antenna system (21) of the second vehicle (20),
- Comparing (103) the spatial information of each antenna system (11, 21) of the first (10) and second vehicle (20) for each timepoint based on each of the predicted trajectories (1, 2),
- Determining (104) a spatial configuration of each antenna system (11, 21) of the first (10) and second vehicle (20) for each timepoint based on the comparing (103),
- Checking (105) if the determined spatial configuration fulfils the requirement of keeping the attachment of the established beam pair A, B for each timepoint of both predicted trajectories (1, 2), and
- Determining (106) a prediction of the beam detachment and the anticipated time of the beam detachment T_{f} for the given time period based on the checking (105).

## Description

The invention relates to a method for determining a prediction of a beam detachment. Furthermore, the invention relates to a vehicle and a system for this purpose.

### State of the art

The evolution of wireless technology has paved the way for the usage of 5G networks, promising unprecedented levels of speed, capacity, and connectivity. Central to the functionality of 5G is the utilization of different radio spectrum bands, each assigned to specific frequency ranges known as FR1, FR2, and FR3. These frequency ranges can play a role in enabling the diverse capabilities and performance of 5G networks. FR2, or Frequency Range 2, represents the higher frequency bands, specifically those in the millimeter wave (mmWave) range. This range covers frequencies above 24 GHz. FR2 offers immense bandwidth, enabling ultra-fast data speeds and significantly increased capacity. These frequencies can be for example helpful in high-demand scenarios where substantial amounts of data need to be transmitted simultaneously.

One of the key factors that enable the use of mmWave frequencies is a narrow beam width of a signal. Due to the short wavelength and the usage and characteristics of beamforming, more antennas can be placed closer together for example in an antenna array. However, the antenna beam width can be much narrower than at lower frequency bands such as in FR1. This allows a more precise targeting of a signal. Therefore, mmWave signals can be directed more efficiently towards specific devices, rather than spanning across a wide area. Further, such narrow antenna beams can reduce interference between different wireless nodes because each node can be directed to use a different beam direction. However, a drawback of a narrow beam is a higher risk of a possible beam detachment between two devices than in the lower frequency ranges. This circumstance can cause a sudden misalignment of beams and consequently can disrupt communication between devices. In the automotive area, especially in the area of autonomous driving, such a sudden disruption of the communication is not acceptable because a failure or misfunction could have serious consequences, such as an accident.

### Disclosure of the invention

It is therefore an object of the present invention to at least partially overcome the disadvantages described above. In particular, it is an object of the present invention, to provide a method to improve the determining of a possible beam detachment.

The above object is solved by a method with the features of claim 1, a vehicle with the features of claim 10 and a system with the features of claim 11, further by a respective computer program and a computer-readable medium. Further features and details of the invention are disclosed in the respective dependent claims, the description, and the drawings. Features and details described in connection with the inventive method also apply to the inventive vehicle as well as the inventive system, and vice versa in each case, so that with respect to the disclosure concerning the individual aspects of the invention reference can always be made mutually.

The object is particularly solved by a method for determining a prediction of a beam detachment. A first vehicle comprises an antenna system for using at least one beam. The antenna system of the first vehicle is connected with a further antenna system of a second vehicle via an established beam pair. The method comprises the following steps performed at the first vehicle or at the Ego vehicle:
- Determining a prediction of a trajectory of the first vehicle for a given time period, wherein the trajectory is defined as the vehicle's path based on space and time, in particular based on coordinates and on time points,
- Receiving a signalling comprising a mobility awareness information of the second vehicle, wherein the mobility awareness information comprises a further prediction of a trajectory of the second vehicle for the given time period and a spatial information of the antenna system of the second vehicle,
- Comparing the spatial information of each antenna system of the first and second vehicle for each timepoint based on each of the predicted trajectories,
- Determining a spatial configuration of each antenna system of the first and second vehicle for each timepoint based on the comparing,
- Checking if the determined spatial configuration fulfils the requirement of keeping the attachment of the established beam pair A, B for each timepoint of both predicted trajectories, and
- Determining a prediction of the beam detachment and the anticipated time of the beam detachment T_{f} for the given time period based on the checking.

This allows the vehicle to detect a beam detachment at an early stage. Further, this has the advantage that the vehicle is advantageously enabled to initiate proactively measures avoiding the beam detachment or the beam failure instead of only reacting to the beam detachment. Furthermore, the considering of mobility awareness information related to the vehicles' mobility advantageously supports the first and the second vehicle predicting the beam detachment based on the predicted trajectories of the vehicles. A trajectory refers to the path followed by an object or vehicle through space and time. It describes the motion of the vehicle as it moves through space. The trajectory can have various shapes. For example, it can be a straight line or a curve or even a complex path depending on a traffic situation or on another condition. Further, trajectories can be two-dimensional, or three-dimensional, depending on the number of spatial dimensions involved in the device's or vehicle's motion. Trajectories are time-dependent, meaning they describe the device's or vehicle's position at different points in time. If all the initial conditions and forces acting on the object are known, the trajectory can be determined deterministically. This means that the object's position and velocity at any given time can be calculated. A mobility awareness information can be defined as information or data regarding the mobility characteristics of users or devices within a communications network. This type of information can enable the device or vehicle to adapt and optimize its operation with regard to positioning or controlling the vehicle based on the movements of other devices. A spatial information can be understood as how the antenna system can transmit and receive electromagnetic waves or signals in different directions in space. In other words, it describes how the antenna's radiation pattern can change as a function of direction or orientation. The radiation pattern of an antenna can be a graphical representation of its directional properties, showing the relative strength of the transmitted or received signal in relation to different directions.

It is also possible that the spatial information and/or a beam-structure information comprises an orientation information and a position of each antenna system (11, 21) of the first (10) and the second vehicle (20), wherein during the comparing (103) the method (100) comprises the further following step:
- Comparing the orientation information and the position of each antenna system (11, 21) of the first (10) and second vehicle (20) for each timepoint based on each of the predicted trajectories (1, 2).

This has the advantage to enabling a faster and more efficient detection of a beam detachment. Further, considering of spatial information and/or beam-structure information related to the vehicles' antenna system advantageously supports the first and the second vehicle predicting the beam detachment based on the predicted trajectories of the vehicles. A beam structure information can be understood as information of an antenna system comprising characteristic information of the main lobe and sidelobes in the antenna system's radiation pattern, for example it comprises orientation information in relation to the radiation pattern. The main lobe is the central, focused part of the radiation pattern that determines the antenna's primary directionality. Sidelobes are secondary lobes that appear in other directions around the main lobe.

It is possible that the antenna system of the first vehicle comprises at least two multiple antenna arrays pointing to different directions. The method comprises the further step:
- Determining a prediction of a possible switching of the at least one beam for each timepoint of the trajectories of the given time period based on the checking.

Switching can be preferably understood as switching from a first of the at least two multiple antenna arrays to a second of the at least two multiple antenna arrays to maintain the established beam pair. This allows the vehicle to maintain the established beam pair with the other vehicle or device. Further, this has the advantage for the vehicle to take an activity in a faster and more flexible way.

It is further possible that the antenna system of the first vehicle comprises one directed antenna array. The method comprises the further step:
- Switching to another communication mode based the anticipated time of the beam detachment T_{f}, wherein the communication mode comprises a communication via a frequency range such as FR1 and/or communication with another network element of a cellular network such as a node or a relay.

This allows to the vehicle to advantageously maintain the necessary communication via an alternative channel of the cellular network. Further, this has the advantage, that the vehicle can sustain communication to manage the safe operation of the vehicle.

It may be possible that the method comprises the further step:
- Performing a timeseries alignment of the predicted trajectories of the first and second vehicle in order to obtain the position based on the same timestamp to select a, preferably appropriate, beam, preferably out of a selection of valid beams of the antenna array, to avoid or delay the beam detachment.

This allows to increase the accuracy and certainty of the prediction significantly. Further, this has the advantage that the vehicle can appropriately select the effective beam for a better and continuous operation.

It is conceivable that the method comprises at least one of the following steps:
- Transmitting a signalling to provide a result of the anticipated time of the beam detachment T_{f} if predicted during the determining step,
- Transmitting a signalling to provide a result of an anticipated beam recovery Time T_{R} if predicted during the determining step,
- Transmitting and/or receiving a signalling to provide a beam-structure information, wherein the beam structure information comprises at least one of the following information:
   - a number of beams,
   - a number of valid beam sets, wherein each beam set comprises a different beam distribution among all beams or different beamwidths,
   - a beamwidth of the antennas of the first and second vehicle,
   - the orientation of the antenna of the antenna system.

This has the advantage that a necessary information for calculating a prediction of a beam detachment can be exchanged with another entity or with other entities in the cellular network to improve the process.

In a further embodiment the method comprises during the determining step the following further step:
- Determining a prediction of a best beam-pair selection and/or a best beam pair tracking and/or best beam sweeping based on a prediction model, wherein the prediction model is based on the mobility awareness information of the first vehicle and on the received signalling comprising the mobility awareness information of the second vehicle.

The usage of the prediction model advantageously increases the safety, efficiency, and performance of the inventive method. Further, this allows the vehicle to anticipate the future movements of other vehicles, pedestrians, or obstacles on the road. By analyzing data and real-time sensor inputs, the vehicle can make an effective decision to avoid potential collisions or to advantageously reduce an accident. Furthermore, the usage of a prediction model supports the vehicle planning its actions well in advance. By anticipating the situation in the future for example the vehicle can choose the most appropriate path or driving maneuver.

It is also possible that the prediction model comprises a machine learning model being trained by an artificial intelligence (Al) using a dataset comprising historical beamforming and/or beam steering data and corresponding optimal beam pair selections or beam steering.

This allows to faster identify the possible beam detachment and advantageously improves the understanding of complex patterns more efficiently within large datasets that might not be apparent through a traditional prediction model. Further, a trained model based on using artificial intelligence (Al) has the advantage to uncover more valuable information and make more accurate and faster predictions. Further, this allows to process and analyze multiple data types and/or information simultaneously. Furthermore, this allows for a more comprehensive prediction process considering for example a vehicle's various sensors.

It is a possibility that the method comprises the further step:
- Receiving a signalling from a smart infrastructure to initiate a switching from a direct communication with the smart infrastructure to a network-based communication based on a determining of a prediction of the beam detachment by the smart infrastructure.

This has the advantage that the vehicle can consider further important information regarding its current situation, to more efficiently predict or anticipate a disruption or interference in the vehicle's communication.

Another aspect of the invention is a vehicle for determining a prediction of a beam detachment, comprising an antenna system, wherein the antenna system of the vehicle is connected with another antenna system of a further vehicle via an established beam pair, and a processor, which is connected with the antenna system of the vehicle and wherein the processor is configured to carry out the steps according to the inventive method. Thus, this vehicle according to the invention brings the same advantages as have been described in detail with reference to the inventive method.

Another aspect of the invention is a system for determining a prediction of a beam detachment, wherein the system comprises a first and a second device, wherein the first device comprises an antenna system using at least one beam, wherein the antenna system of the first device is connected with a further antenna system of the second device via an established beam pair, and the system is configured to carry out the steps of the inventive method. Thus, this system according to the invention brings the same advantages as have been described in detail with reference to the inventive method.

It is possible that the first and the second device comprises a first and a second vehicle, wherein the first and/or second vehicle comprise a vehicle type such as a car, a motorcycle, a truck, a bus, a boat, a ship, an autonomous vehicle such as a drone or the like. It is also conceivable that the first device comprises a vehicle and the second device comprises a smart infrastructure, wherein the smart infrastructure device comprises a traffic sign, a traffic light, a traffic tunnel, a garage, a building, an advertising pillar, a railroad barrier or the like. This allows to improve the interacting and communicating of different entities in a traffic situation. Further this has the advantage that the accuracy and the amount of necessary information for evaluating for example a traffic situation is significantly increased.

According to a further aspect, there is provided a computer program comprising instructions to cause the inventive vehicle and/or the inventive system to execute the steps of the inventive method.

According to a further aspect, there is provided a computer-readable medium having stored thereon the above-mentioned computer program.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A first embodiment of the inventive method;
- Fig. 2:: A further embodiment of the inventive method;
- Fig. 3:: A further embodiment of the inventive method; and
- Fig. 4:: A schematic diagram showing a further embodiment of the inventive method.

One main idea of the invention is the efficient usage of mobility awareness information related to the mobility of a vehicle 10, 20 like for example speed, heading, steering, or orientation. This can be available at the vehicle 10 using its own sensors perceiving its own mobility awareness information conveyed to its own communication access layer or can be received through a communication link from a second device 20 or vehicle 20 enabled by a current established beam pair A, B. It is a further main idea of the invention using information based on one or two or several predicted trajectories 1, 2 of the involved vehicles 10, 20 for a certain time period, like for example a predicted trajectory based on a curvature information, heading, direction, or speed. The usage of the predicted or anticipated trajectory of the first and second vehicle 10, 20 based on the provided mobility awareness information, which comprises for example a beam structure information like for example a number of beams at each device or node, beam sets of different beams of an antenna system 11, 21, beamwidth of a beam of an antenna system 11, 21 of a vehicle 10, 20 and/or the orientation of the antennas of each of the antenna system 11, 21 enables the determining of a prediction of a beam detachment together with an anticipated time T_{f} of the beam detachment.

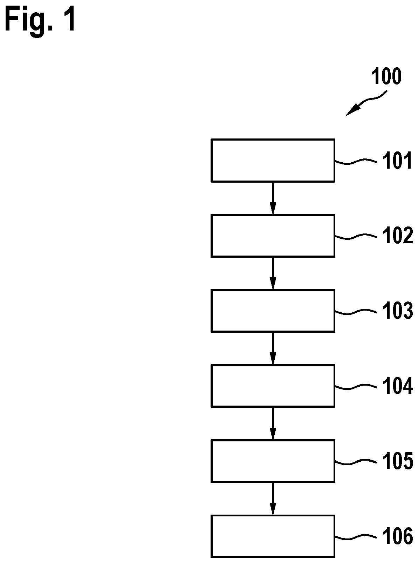

Fig. 1 shows an embodiment of the inventive method 100. Fig. 1 illustrates according to one embodiment of the invention a method 100 for determining a prediction of a beam failure and/or beam detachment at a first vehicle 10. The first vehicle 10 comprises an antenna system 11 for using at least one beam, wherein the antenna system 11 of the first vehicle 10 is connected with a further antenna system 21 of a second vehicle 20 via an established beam pair. The method 100 comprises the following steps performed at the first vehicle 10.

According to step 101 a prediction of a trajectory of the first vehicle 10 for a given time period is determined. The trajectory is defined as the vehicle's path based on space and time, in particular based on coordinates and on time points.

According to step 102 a signalling comprising a mobility awareness information of the second vehicle 20 is received. The mobility awareness information comprises a further prediction of a trajectory of the second vehicle 20 for the given time period and a spatial information of the antenna system of the second vehicle 20.

According to step 103 the spatial information of each antenna system of the first 10 and second vehicle 20 for each timepoint is compared based on each of the predicted trajectories. According to step 104 a spatial configuration of each antenna system 11, 21 of the first 10 and second vehicle 20 for each timepoint is determined based on the comparing in step 103. According to step 105 it is checked if the determined spatial configuration fulfils the requirement of keeping the attachment of the established beam pair for each timepoint of both predicted trajectories. According to step 106 a prediction of the beam detachment and the anticipated time of the beam detachment T_{f} for the given time period is determined based on the checking in step 105.

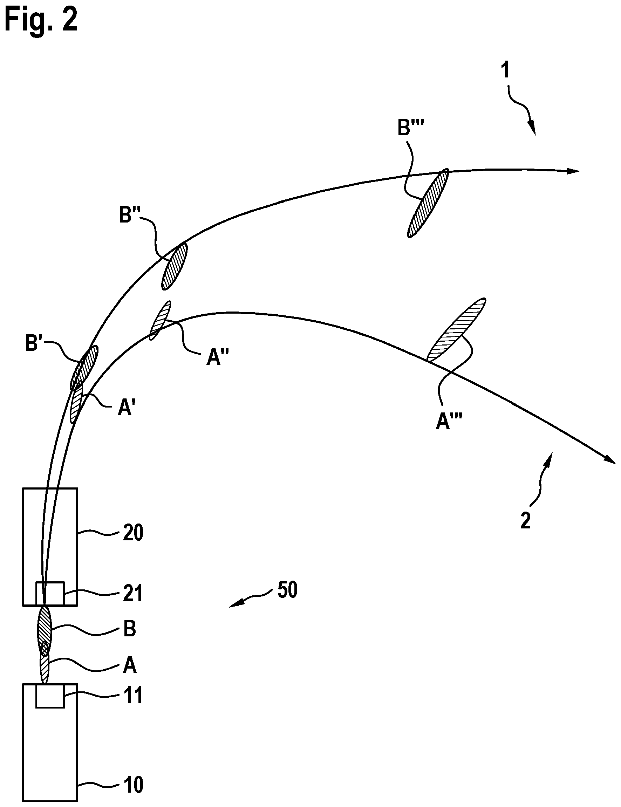

Fig. 2 illustrates a further embodiment of the inventive method 100. In this embodiment a first vehicle 10 and a second vehicle 20 are driving in the same direction. Each vehicle comprises an antenna system 11, 21. The antenna system 11 of the first vehicle is arranged at the front of the vehicle 10. The antenna system 21 of the second vehicle 20 is arranged on the rear of the vehicle 20. This means that the antennas of both antenna systems 11, 21 are transmitting and receiving in opposite directions in relation to both vehicles 10, 20. In this embodiment, the vehicles 10, 20 only have one directed antenna array each 11, 21 with one beam A, B as depicted in Fig. 2. Alternatively, the antenna array 11, 21 can also comprise multiple beams (not shown). Each antenna system 11, 21 comprises means for beam steering and/or beamforming. Fig. 2 depicts a trajectory 1 of the first vehicle 10 and a further trajectory 2 of the second vehicle 20. In Fig. 2 the arrangement of several beam pairs A, B is shown in relation to location and time on the trajectories 1, 2. The beam pair A and B, beam pair A' and B', or beam pair A" and B" in Fig. 2 depicts a partial prediction of an established or attached beam for a different timepoint of the predicted trajectories 1,2. Fig. 2 illustrates with regards to beam pair A‴ and B‴ the prediction of an detached beam pair for the anticipated or predicted timepoint T_{f} in relation to predicted trajectories 1,2. Beam pair A, B and beam pair A', B' illustrates a strong beam connection between the two vehicles 10, 20. Beam pair A", B" shows a weak beam connection. The beam pair A‴, B‴ illustrates the predicted or anticipated timepoint of the beam detachment or beam failure of the two beams A'", B'". In Fig. 2 it is further shown for the beam pair A", B" for a given time period and related to the position of the vehicle 10, 20 on the trajectories 1,2 that a steering of each of the beam to maintain the attached beam pair is still possible. However, looking at the situation of beam pair A‴, B‴ in Fig. 2 such a steering of these two beams would no longer be effective as predicted by the inventive method.

In case of predicting a beam detachment and by considering the arrangement of the two directed antenna arrays of the antenna systems 11, 21 each vehicle 10, 20 can switch for example to network-based communication or another communication source to continue their message exchange until an anticipated and possible recovery time T_{R}. for a re-attached beam pair of both vehicles 10, 20, which is called beam recovery.

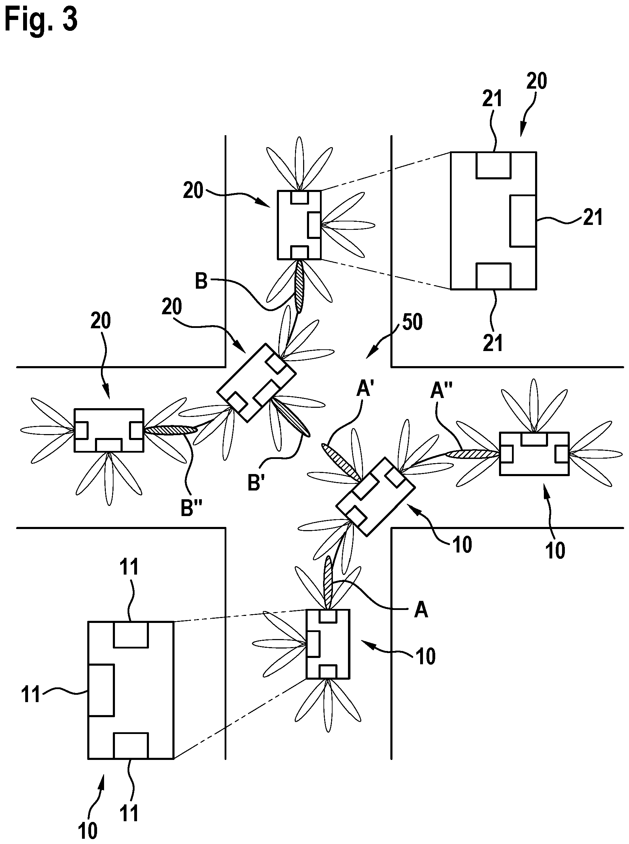

Fig. 3 illustrates a further embodiment of the inventive method 100. Fig. 3 depicts a first vehicle 10 and a second vehicle 20 in a different scenario than in Fig.1. The first vehicle 10 is approaching the second vehicle 20 and each vehicle 10, 20 is approaching an intersection to make a right turn. The first vehicle 10 comprises an antenna system 11. The antenna system 11 comprises multiple antenna arrays 11, 21 pointing to different directions. For example, the antenna system 11. 21 can comprise antennas such as multi-panel antennas, a distributed antenna system, 360-degree antennas or the like.

Further, Fig. 3 illustrates that the first vehicle 10 and the second vehicle 20 are communicating through an attached beam pair A, B. In a first step the first vehicle 10 or also called Ego vehicle 10 establishes its own trajectory1 for a given time period, for example for the next seconds. The established trajectory 1 is sent for example either as quantized or mapped values to a lower or an access layer of a cellular network (not shown). Then, in a second step the Ego vehicle 10 receives through the established beam pair the predicted trajectory 2 for the given time period of the second vehicle 20 or also called Remote Vehicle 20. This reception is comprised for example in a V2X message. The predicted trajectory 2 is based on the mobility awareness information together with the spatial information of the antenna system 21 of the second vehicle 20.

In a further step the vehicle 10 can perform a timeseries alignment between the trajectories of the two vehicles 10, 20 in order to obtain the position of each vehicle 10, 20 at the same timestamp. This allows to select the appropriate beams A, B amongst the valid sets of beams of the antenna system 11, 21. Then, the first vehicle 10 compares the spatial information and/or a beam-structure information, such as for example the orientation and the position of the antennas of the antenna system 11, 21 for each of the two vehicles 10, 20 for each timepoint of the trajectories 1, 2. After this, the first vehicle checks if the spatial configuration allows to keep the attachment of the pair of beams. Further, the first vehicle 10 determines a possible prediction of sweeping the beams A. The vehicle 10, 20 can prepare and switch from one antenna array of the antenna system 11, 21 to another antenna array of the antenna system 11, 21 in each vehicle 10, 20 to maintain an optimal attached beam pair A, B between the two vehicles 10, 20. Then, the first vehicle 10 can determine a prediction of a beam-failure or beam detachment together with the predicted or anticipated time of detachment/failure T_{f} .

Optionally, a signalling from the first vehicle 10 to the second vehicle 20 can be transmitted to provide a result of an anticipated beam recovery Time T_{R} or beam reattachment time if predicted (not shown). Further, there can be a further signalling between the first and the second vehicle 10, 20 to exchange mobility awareness information regarding the beam-structure of the antenna system 11.

In another embodiment not shown in this Fig. 3 the first vehicle 10 can also communicate with a smart infrastructure 20 (not illustrated) instead of the second vehicle 20. The smart infrastructure 20 or smart infrastructure device 20 comprises for example a traffic sign, a traffic light, a traffic tunnel, a garage, a building, an advertising pillar, a railroad barrier or the like. Further, the smart infrastructure 20 determines a prediction of the trajectory 1 of the vehicle 10. In case the smart infrastructure 20 detects that the direct communication with the vehicle 10 will be interrupted because of a predicted beam detachment the smart infrastructure 20 would send a signalling to the vehicle 10 to trigger for example a switch to a network-based communication.

In another embodiment also not shown the beam tracking and/or sweeping can be based on a prediction model, which relies on fed mobility awareness information at each vehicle 10, 20 or device 10, 20. The predicting can be done using a traditional analysis method or using an artificial or machine learning mechanism.

The prediction model using an artificial intelligence mechanism can be trained. Based on the model it can be possible to predict the optimal beam-pair selection or optimal beam pair steering based on the inputted ego vehicle's 10 beam structure information and the second vehicle's 20 beam structure information comprising information regarding for example number of beams, beamwidth, or the like. Further the model can be fed with further mobility awareness information of both vehicles 10, 20 regarding for example an anticipated time of beam tracking and/or an anticipated time of beam failure T_{f}, and/or an anticipated time of beam recovery T_{R}.

Fig. 2 and Fig. 3 depicts a system 50 for determining a prediction of a beam detachment. The system 50 comprises the first and a second vehicle 10, 20. The first and/or second vehicle 10, 20 comprise for example a car, a motorcycle, a truck, a bus, a boat, a ship, an autonomous vehicle such as a drone or the like.

In another embodiment (not shown) the system 50 comprises a first and a second device 10, 20 The first device comprises an antenna system 11 for transmitting and/or receiving at least one beam A. The antenna system 11 of the first device 10 is connected with a further antenna system 21 of a second device 20 via an established beam pair A, B. The system 50 is configured to carry out the steps according to the inventive method.

In a further embodiment (not illustrated) the system 50 the second device 20 comprises a smart infrastructure 20 or smart infrastructure device 20. The smart infrastructure 20 comprises for example a traffic sign, a traffic light, a traffic tunnel, a garage, a building, an advertising pillar, a railroad barrier or the like. Smart infrastructure can be understood as an advanced network of sensors, which are integrated into the physical infrastructure of roads or urban spaces. This can support a seamless communication between vehicles, pedestrians, and devices. For example, a traffic signal equipped with V2x capabilities can interact with a vehicle. Further, smart infrastructure 20 can detect potential hazards and communicate this information to a vehicle 10 to prevent accidents.

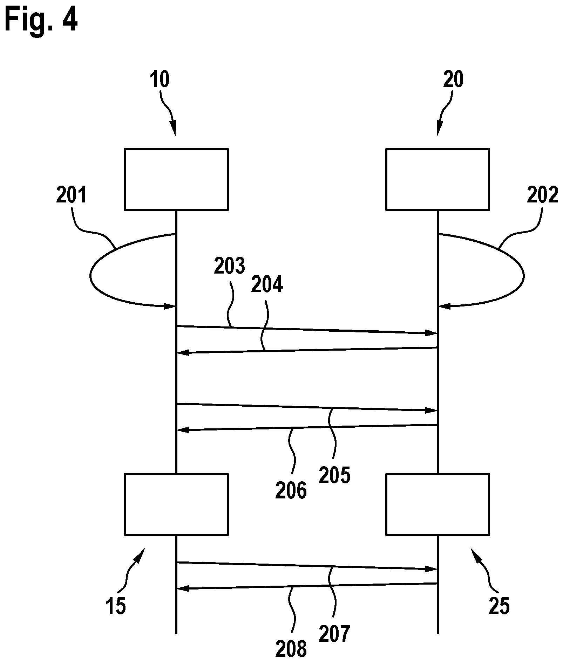

Fig. 4 shows a schematic diagram of a further embodiment of the inventive method 100. Fig. 4 illustrates an exemplary sequence diagram of a beam-pair prediction. In this embodiment the beams of both vehicles 10,20 are attached. This allows each vehicle 10, 20 to transmit and receive a signalling from the respective other vehicle 10, 20. The signalling comprise the mobility awareness information already mentioned above.

Each vehicle 10, 20 obtain their own mobility awareness information 201, 202 and the received awareness information of the respective other vehicle 10, 20. In step 203, 204 both vehicles 10, 20 exchange their beam structure with each other. Following this in step 205, 206 the two vehicles 10, 20 also exchange further respective mobility awareness information for determining a prediction of a possible beam sweeping, beam tracking or beam detachment. Based on this received information each vehicle 10, 20 can check if a spatial configuration fulfils the requirement of keeping the attachment of the established beam pair for each timepoint of both predicted trajectories and determine a prediction of a beam detachment based on a prediction model 15, 25.

Based on the prediction model the first vehicle 10 and the second vehicle 20 vehicle is able for example to select a best beam pair for a given time period. This can avoid a beam detachment of the established beam pair A, B. By using the prediction model the vehicle 10, 20 can further determine a prediction of a beam detachment and the anticipated time of the beam detachment at each timepoint of the trajectories of the given time period. Then, for example the result of a respective selection of optimal beams is communicated or signalled to the other vehicle 10, 20 for further usage.

The above explanation of the embodiments describes the present invention in the context of examples. Of course, individual features of the embodiments can be freely combined with each other, provided that this is technically reasonable, without leaving the scope of the present invention.

## Claims

1. A method (100) for determining a prediction of a beam detachment, wherein a first vehicle (10) comprises an antenna system (11) for using at least one beam, wherein the antenna system (11) of the first vehicle (10) is connected with a further antenna system (21) of a second vehicle (20) via an established beam pair A,B, wherein the method (100) comprises the following steps performed at the first vehicle (10):
- Determining (101) a prediction of a trajectory (1) of the first vehicle (10) for a given time period, wherein the trajectory (1) is defined as the vehicle's path based on space and time, in particular based on coordinates and on time points,
- Receiving (102) a signalling comprising a mobility awareness information of the second vehicle (20), wherein the mobility awareness information comprises a further prediction of a trajectory (2) of the second vehicle (20) for the given time period and a spatial information of the antenna system (21) of the second vehicle (20),
- Comparing (103) the spatial information of each antenna system (11, 21) of the first (10) and second vehicle (20) for each timepoint based on each of the predicted trajectories (1, 2),
- Determining (104) a spatial configuration of each antenna system (11, 21) of the first (10) and second vehicle (20) for each timepoint based on the comparing (103),
- Checking (105) if the determined spatial configuration fulfils the requirement of keeping the attachment of the established beam pair A, B for each timepoint of both predicted trajectories (1, 2), and
- Determining (106) a prediction of the beam detachment and the anticipated time of the beam detachment T_{f} for the given time period based on the checking (105).

2. The method (100) according to claim 1, **characterized in that** the spatial information and/or a beam-structure information comprises an orientation information and a position of each antenna system (11,21) of the first (10) and the second vehicle (20), wherein during the comparing (103) the method (100) comprises the further following step:
- Comparing the orientation information and the position of each antenna system (11, 21) of the first (10) and second vehicle (20) for each timepoint based on each of the predicted trajectories (1, 2).

3. The method (100) according to claim 1 or 2, **characterized in that** the antenna system (11) of the first vehicle (10) comprises at least two multiple antenna arrays (11) pointing to different directions, **characterized in that**, the method (100) comprises the further step:
- Determining a prediction of a possible switching of the at least one beam (A) for each timepoint of the trajectories (1, 2) of the given time period based on the checking (105).

4. The method (100) according to any one of the preceding claims, **characterized in that** the antenna system (11) of the first vehicle (10) comprises one directed antenna array, **characterized in that**, the method (100) comprises the further step:
- Switching to another communication mode based on the anticipated time of the beam detachment T_{f}, wherein the communication mode comprises a communication via a frequency range such as FR1 and/or communication with another network element of a cellular network such as a node or a relay.

5. The method (100) according to any one of the preceding claims, **characterized in that** the method (100) comprises the further step:
- Performing a timeseries alignment of the predicted trajectories (1, 2) of the first (10) and second vehicle (20) in order to obtain the position based on the same timestamp to select a beam (A)to avoid or delay the beam detachment.

6. The method (100) according to any one of the preceding claims, **characterized in that** the method (100) comprises at least one of the following steps:
- Transmitting a signalling to provide a result of the anticipated time of the beam detachment T_{f} if predicted during the determining (106) step,
- Transmitting a signalling to provide a result of an anticipated beam recovery Time T_{R} if predicted during the determining (106) step,
- Transmitting and/or receiving a signalling to provide a beam-structure information, wherein the beam structure information comprises at least one of the following information:
- a number of beams,
- a number of valid beam sets, wherein each beam set comprises a different beam distribution among all beams or
different beamwidths,
- a beamwidth of an antenna of the first and second vehicle (10, 20),
- an orientation of the antenna of the antenna system (11, 21).

7. The method (100) according to any one of the preceding claims, **characterized in that** during the determining (106) step the method (100) comprises the following further step:
- Determining a prediction of a best beam-pair selection and/or a best beam pair tracking and/or best beam sweeping based on a prediction model (15, 25), wherein the prediction model (15, 25) is based on the mobility awareness information of the first vehicle (10) and on the received (102) signalling comprising the mobility awareness information of the second vehicle (20).

8. The method (100) according to claim 7, **characterized in that** the prediction model (15, 25) comprises a machine learning model being trained by an artificial intelligence (Al) using a dataset comprising historical beamforming and/or beam steering data and corresponding optimal beam pair selections or beam steering.

9. The method (100) according to any one of the preceding claims, **characterized in that** the method (100) comprises the further step:
- Receiving a signalling from a smart infrastructure (20) to initiate a switching from a direct communication with the smart infrastructure (20) to a network-based communication based on a determining of a prediction of the beam detachment by the smart infrastructure (20).

10. A vehicle (10) for determining a prediction of a beam detachment, comprising an antenna system (11), wherein the antenna system (11) of the vehicle (10) is connected with another antenna system (21) of a further vehicle (20) via an established beam pair, and a processor, which is connected with the antenna system (11) of the vehicle (10) and wherein the processor is configured to carry out the steps of the method (100) according to any one of the preceding claims.

11. A system (50) for determining a prediction of a beam detachment, wherein the system (50) comprises a first and a second device (10, 20), wherein the first device comprises an antenna system for using at least one beam, wherein the antenna system of the first device (10) is connected with a further antenna system of the second device (20) via an established beam pair, **characterized in that** the system (50) is configured to carry out the steps of the method (100) according to any one of claims 1 to 9.

12. A computer program comprising instructions to cause the vehicle (10) according to claim 10 and/or the system (20) according to claim 11 to execute the steps of the method (100) according to one of claims 1 to 9.

13. A computer-readable medium having stored thereon the computer program of claim 12.
